**Europäisches Patentamt**

**European Patent Office**

**Office européen des brevets**

(19)

(11) Veröffentlichungsnummer: **0 022 901**
**B2**

(12) **NEUE EUROPÄISCHE PATENTSCHRIFT**

(45) Veröffentlichungstag der neuen Patentschrift:
**28.01.87**

(21) Anmeldenummer: **80101740.1**

(22) Anmeldetag: **01.04.80**

(51) Int. Cl.⁴: **A 21 D 13/08,** A 21 D 10/04

(54) **Waffel und Verfahren zu deren Herstellung.**

(30) Priorität: **20.07.79 DE 2929496**

(43) Veröffentlichungstag der Anmeldung:
**28.01.81 Patentblatt 81/4**

(45) Bekanntmachung des Hinweises auf die Patenterteilung:
**20.06.84 Patentblatt 84/25**

(45) Bekanntmachung des Hinweises auf die Entscheidung
über den Einspruch:
**28.01.87 Patentblatt 87/5**

(84) Benannte Vertragsstaaten:
**AT BE CH DE FR GB IT LI LU NL SE**

(56) Entgegenhaltungen:
**FR - A - 1 037 784**
**GB - A - 417 055**

**Bericht über die 28. Tagung für Bäckerei-Technologie
1977, S. 151-159
"Nurupan wirkt" der Firma Edelsoja GmbH,
Ausschläger Elbdeich 21, 2000 Hamburg 28, 1976**

(73) Patentinhaber: **Ferrero oHG,
D-3570 Stadtallendorf 1 (DE)**

(72) Erfinder: **Negro, Giuseppe, Müllerwegstannen 11,
D-3570 Stadtallendorf 1 (DE)**

(74) Vertreter: **Hoffmann, Klaus, Dr. rer. nat. et al, Hoffmann .
Eitle & Partner Patentanwälte Arabellastrasse 4,
D-8000 München 81 (DE)**

ACTORUM AG

**Beschreibung**

Die Erfindung betrifft eine Waffel mit glatter dichter Oberfläche und einer zellenartigen Innenstruktur und ein Verfahren zu deren Herstellung.

Waffeln dienen der Nahrungs- und Genussmittelindustrie als Behälter oder Träger für Nahrungsmittelmassen unterschiedlichster Art. Unabhängig von der Art der mit oder in den Waffeln aufgenommenen Nahrungsmittel besteht die Anforderung, dass die Waffel eine ausreichende Stabilität bzw. Festigkeit aufweisen soll, und zwar während ihrer Herstellung, beim Verpacken, im verpackten Zustand und auch bei der Handhabung durch den Verbraucher. Ebenso wichtig ist die Anforderung, dass die Waffel gute organoleptische Eigenschaften aufweist, insbesondere zart und rösch ist und optisch ein ansprechendes Erscheinungsbild bezüglich Farbe und Form bietet.

Waffeln werden entweder mit beidseitiger glatter Oberfläche gebacken oder sie haben mindestens eine mit karreeförmigen Vertiefungen versehene Oberfläche. Dabei ist die Entscheidung des Herstellers für eine Waffel mit glatter Oberfläche oder einer Waffel mit Karree abhängig von der erwünschten Dicke des ausgebackenen Enderzeugnisses. Waffeln mit glatter Oberfläche lassen sich nur relativ dünn herstellen. Erhöht man die Teigmenge und damit die Dicke der Waffel, dann ist es nicht möglich, in der für Waffeln kurzen Backzeit die erforderliche Wassermenge abzuführen, mit der Folge, dass die Waffeln nur an den Aussenflächen, nicht aber im Inneren durchgebacken und rösch sind. Bei der Erhöhung der Backtemperatur besteht das Risiko, dass die Waffel zwar durchgebacken, aber an den Aussenflächen verbrannt ist.

Die dünnen Waffeln haben den Nachteil, dass sie leicht zerbrechlich sind. Will man die Waffel verdicken, um das Bruchrisiko zu vermeiden, ist es erforderlich, die Oberfläche des Backgutes zu vergrössern, um das Wasser abführen zu können. Dies erreicht man dadurch, dass man die Waffelform mit meist quadratischen Vertiefungen versieht. Die dadurch erzielte Vergrösserung der Oberfläche der mit derartigen Waffelformen ausgebackenen Waffeln sichert das gewünschte Backverhalten des Waffelteiges. Darüber hinaus ist es ein zusätzlicher Vorteil, dass die Stege bzw. Rippen der Waffel zusätzliche Stabilität verleihen.

Häufig werden Waffeln mit Schokolade oder anderen Überzugsmassen überzogen. Mit Karrees oder Verstärkungsrippen versehene Waffeln haben dann den Nachteil, dass sie in den Vertiefungen verhältnismässig viel der teuren und kalorienreichen Schokoladenüberzugsmasse aufnehmen. Um eine äusserlich glatte Schokoladenoberfläche zu schaffen, müssen dabei zunächst die Vertiefungen ausgefüllt sein. Diese Schwierigkeit entfällt bei Waffeln mit glatter Oberfläche. Die bekannten Waffeln mit glatter Oberfläche, die, wie vorher angegeben, durch ihre Herstellungsweise bedingt, auch verhältnismässig dünn sind, haben eine ungenügende Bruchfestigkeit und sind deshalb weniger geeignet gewesen, um als selbsttragende stabile und handhabungsfeste Körper zur Aufnahme von Füllung verwendet zu werden.

Die mangelnde Stabilität von dünnen Waffeln mit einer glatten Oberfläche kann man dadurch zum Teil kompensieren, dass man sehr dicke Schokoladenüberzüge aufbringt, um dadurch die Festigkeit der Waffel zu erhöhen. Dies bedingt wiederum einen hohen Anteil der Schokoladenmasse der aus Kosten- und Kaloriengründen nicht erwünscht ist. Eine zweite Möglichkeit, die Stabilität von gefüllten Waffeln mit glatter Oberfläche zu erhöhen, besteht darin, dass man ein Vielzahl von Waffelblättern, die mit der Füllung miteinander verklebt werden, verwendet (Sandwichbauweise). In diesem Falle benötigt man somit mehrere Waffelblätter, wodurch das Geschmackserlebnis, das ja im wesentlichen durch die Füllung gegeben ist, weniger intensiv wird.

Es besteht somit ein Bedürfnis für Waffeln, die vorzugsweise als gefüllte Waffeln verwendet werden und die eine glatte Oberfläche haben, damit das Aufbringen von dünnen Schokoladeüberzügen ermöglicht wird, und die dennoch eine für die Herstellung und weitere Handhabung bis zum Verbraucher ausreichende Festigkeit aufweisen, wobei man diese höhere Festigkeit nicht durch die zwangsläufige Verwendung von vielen, durch die Füllmasse miteinander verbundenen Waffelblätter erzielt.

Aufgabe der Erfindung ist es somit, Waffeln mit einer glatten, dichten Oberfläche und einer zellenartigen Innenstruktur zur Verwendung als gefüllte Waffeln aus zwei oder mehr Waffelblättern mit einer erhöhten Festigkeit zu zeigen.

Diese Aufgabe wird durch eine Waffel, die gemäss Patentanspruch 1 hergestellt wurde, erfüllt.

Es ist bekannt, dass für die Backeigenschaften und für die Produkteigenschaften — hierzu zählen die organoleptischen Eigenschaften, das ästhetische Aussehen und die Festigkeit — eine Reihe von Faktoren bestimmend sind:

Das Gewichtsverhältnis von Mehl zu Wasser liegt bei bekannten Waffeln in der Grössenordnung von 1:1,5. Die Menge der verwendeten Backtreibmittel und deren Zusammensetzung kann erheblich schwanken, sie liegt bei etwa 0,10 Gew.-%, bezogen auf den fertigen Teig.

Für Waffeln ist eine Mehlsorte gut geeignet, die schwachen Kleber und stark wasserbindende Stärke aufweist. Weizenmehl erfüllt diese Bedingung recht gut. Die nötige Wassermenge richtet sich im wesentlichen nach den Eigenschaften des Mehls, ein wenig auch nach der Teigpumpe, mit der der fertige Teig auf die Waffeleisen in dosierter Menge gefördert wird. Daneben gibt man Eigelb, Milchpulver, Lecithin, chemische Triebmittel, Fett oder Öl, Salz und auch gegebenenfalls etwas Zucker zu, wobei in der Literatur (vgl. z.B. Gordian 61. Jahrgang — 1454 — S. 26, rechte Spalte) mit Fett oder Öl so sparsam wie möglich umgegangen werden sollte, da zuviel davon die Waffeln kuchenartig mache, aber eine zu geringe Menge die Waffeln an den Backblechen kleben lässt. Als chemische Triebmittel werden meistens Natriumcarbonat (Natron), Natriumbicarbonat und/oder Ammoniumbicarbonat (Hirschhornsalz) dem Teig zugegeben. Besteht das Triebmittel aus Natriumbicarbonat, backt der Waffelteil brauner aus als bei Zumischung von Hirschhornsalz. Aus diesem Grund zieht man letzteres als Triebmittel beim Herstellen von weissen Waffeln vor.

Nachfolgend sind drei bekannte Waffelteigrezepturen benannt:

| Rezeptur I | | Rezeptur II |
|---|---|---|
| (vgl. Gordian 1961, LXI. Jg. – 1454, S. 25 (569) | | |
| Weizenmehl | 25,000 kg | 25,000 kg |
| Wasser | 36,000 l | 36,000 l |
| Eigelb | 0,250 kg | 0,875 kg |
| Vollmilchpulver | 1,000 kg | 0,500 kg |
| Lecithin | 0,100 kg | – |
| Natriumbicarbonat | 0,150 kg | 0,035 kg |
| Hirschhornsalz | 0,050 kg | 0,350 kg |
| Fett oder Öl | 0,200 kg | – |
| Puderzucker | – | 0,850 kg |
| Salz | 0,050 kg | 0,050 kg |
| Eigelbfarbe | nach Gutdünken | |

| Rezeptur III | |
|---|---|
| (vgl. Gordian 1952, LII. Jg. – 1247, S. 19) | |
| Weizenmehl | 10,000 kg |
| Weizenpuder | 1,500 kg |
| Milchpulver | 0,500 kg |
| Staubzucker | 0,100 kg |
| Lecithin | 0,050 kg |
| Eigelb | 0,600 kg |
| Erdnussöl | 0,050 kg |
| Salz | 0,035 kg |
| Natron | 0,075 kg |
| Wasser | 18–20 l |

Erfindungsgemäss wird bei der Zubereitung des Teiges ein Verhältnis von Wasser zu Mehl von 1,6:1 angewendet. Der Fettgehalt des Teiges, der durch das Pflanzenöl eingebracht wird, liegt bei einem Verhältnis von Pflanzenöl zu Mehl von 7:100 und macht bei den besonders bevorzugten Waffeln 2,4%, bezogen auf die fertige Teigmasse, aus.

Die Menge an Backtriebmittel, bezogen auf den fertigen Teig, liegt bei 0,08 Gew.-%, wobei man besonders gute Ergebnisse erzielt, wenn man 0,04 Gew.-% Natriumbicarbonat und 0,04 Gew.-% Ammoniumbicarbonat, jeweils bezogen auf die Teigmasse, als Backtriebmittel verwendet.

Süssungsmittel, die erfindungsgemäss verwendet werden können, sind alle in der Nahrungsmittelindustrie verwendbaren süssenden Stoffe. In der Regel verwendet man Zucker als Süssungsmittel, vorzugsweise Saccharose; daneben oder anstatt Saccharose kann man aber auch andere Zucker wie Mannit, Xylit, Fructose und dergleichen verwenden, und schliesslich ist es auch möglich, auf Zucker ganz zu verzichten und synthetische Süssstoffe zu verwenden. Die Menge an Süssungsmittel richtet sich nach dem gewünschten Süssungsgrad der Waffel und liegt bei Verwendung eines Zuckers, vorzugsweise von Saccharose, bei einer Menge von bis zu 1,2 Gew.-%, bezogen auf die Teigmasse. Bei Verwendung einer zu hohen Zuckermenge besteht die Gefahr, dass der Teig beim Backen an dem heissen Waffeleisen anbackt und/oder die Waffel zu stark bräunt.

Es ist vorteilhaft, Magnesiumhydroxidcarbonat, vorzugsweise in einer Menge von 0,06 Gew.-%, bezogen auf die Teigmasse, mitzuverwenden. Durch Magnesiumhydroxidcarbonat wird die Abtrennbarkeit der Waffel von den Waffeleisen erleichtert.

Das Pflanzenöl wird in dem Teig mittels eines Emulgators verteilt. Als Emulgatoren können die in der Lebensmittelindustrie üblichen Emulgatoren verwendet werden, wobei Lecithin als Emulgator bevorzugt wird, und zwar in einer Menge von 0,15 Gew.-%, bezogen auf die fertige Teigmasse.

Zur geschmacklichen und farblichen Abstimmung der Waffel kann man noch Kakaopulver, vorzugsweise in einer Menge von 1,5 Gew.-%, in die Teigmasse einbringen.

Verfahrensmässig geht man so vor, dass man zunächst Würzmittel — in der Regel verwendet man hierbei Kochsalz — und Backtriebmittel und die Süssungsmittel im Wasser einbringt und dispergiert, und zwar unter Zugabe von Sojamehl. Der Zusatz von Sojamehl zu Waffelrezepturen ist zwar bekannt, wird bei den bekannten Rezepturen jedoch im allgemeinen nicht empfohlen, weil es zu stark bräunt. Vorzugsweise wendet man bei den erfindungsgemässen Waffeln 1,65 Gew.-%, bezogen auf die fertige Teigmasse, an Sojamehl an. Ein geeignetes Sojamehl ist das unter dem Warenzeichen NURUPAN (eingetragenes Warenzeichen der Deutschen Edelsoja GmbH) auf den Markt gebrachte Produkt.

In die erhaltene wässrige Lösung bzw. Aufschlämmung gibt man dann Mehl und Vollmilchpulver im Verhältnis von Wasser zu Mehl von 1,6:1 hinzu. Dabei wird als Mehl vorzugsweise ein Gemisch aus überwiegenden Mengen Weizenmehl und einer kleineren Menge Roggenmehl, vorzugsweise im Gewichtsverhältnis von 94:6, verwendet. Bezogen auf die Teigmasse verwendet man vorzugsweise 32 Gew.-% Weizenmehl und 2 Gew.-% Roggenmehl.

Zusätzlich kann es vorteilhaft sein, Weizenstärke, vorzugsweise in einer Menge von 1 Gew.-%, bezogen auf die Teigmasse, mitzuverwenden.

Anschliessend erfolgt die Zugabe von Pflanzenöl und von 4 bis 8 Gew.-% eines Emulgators für das Öl, bezogen auf das Ölgewicht, wobei Lecithin ein bevorzugter Emulgator ist. Die so erhaltene Masse wird dann in einem Schlagwerk geschlagen unter Ausbildung eines homogenen Teiges. Es eignen sich hierzu am besten hochtourige Schlagmaschinen. Die Schlagzeit beträgt je nach Art der Maschine 3 bis 30 Minuten und vorzugsweise 10 Minuten.

Die geschlagene und gut vermischte Teigmasse wird nun in dosierten Mengen auf ein Waffeleisen gebracht. Während bei den üblichen Waffelrezepturen und -verfahren die Backtemperatur bei 250 bis 300°C bei gleicher Ober- und Unterhitze liegt, und die Backzeiten etwa 2½ bis 4 Minuten betragen, wendet man erfindungsgemäss beachtlich niedrigere Backtemperaturen an, wobei zwischen dem unteren und dem oberen Waffeleisen eine Temperaturdifferenz von 10 bis 20°C vorliegt, und das kältere Waffeleisen eine Temperatur von mindestens 150°C hat. Eine obere Temperaturgrenze liegt für das heissere Waffeleisen bei etwa 200°C. Die Backzeit beträgt 2,5 bis 3 Minuten.

Da man Waffeln mit einer glatten dichten Oberfläche herstellen will, ist es erforderlich, dass zumindest eine Seite der Waffel glatt ist, und dies bedingt, dass die die Aussenhaut der Waffelhälfte erzeugende Oberfläche des Waffeleisens glatt sein muss. Ebenso können aber auch beide Waffeleisenhälften glatt sein.

Natürlich muss man dafür Sorge tragen, dass genügend Oberfläche für einen Dampfaustritt gewährleistet ist; denn die in dem Teig enthaltene Wassermenge muss bei den angegebenen Temperaturen innerhalb einer bestimmten bevorzugten Zeit verdampft werden. Man wird infolgedessen die Dampfaustrittsflächen so wählen, dass sie der erforderlichen erhöhten Dampfaustrittsmenge entsprechen, wobei man die Zahl der Öffnungen erhöhen oder die Öffnungen selbst vergrössern kann.

Eine bevorzugte Waffeleisentemperatur ist eine Temperatur von 175°C für das obere Waffeleisen und von 160°C für das untere Waffeleisen.

Beispiel

Eine bevorzugte Waffel nach der Erfindung hat folgende Rezeptur (bezogen auf 1 kg Teigmasse)

| | |
|---|---|
| Wasser | 560 g |
| Vollmilchpulver | 16,5 g |
| Sojamehl «NURUPAN» | 16,5 g |
| Weizenmehl, Type 550 | 322,1 g |
| Roggenmehl, Type 815 | 20 g |
| Erdnussöl | 24 g |
| Weizenstärke | 10 g |
| Kochsalz | 1 g |
| Natriumbicarbonat | 0,4 g |
| Ammoniumbicarbonat | 0,4 g |
| Lecithin | 1,5 g |
| Zucker | 12 g |
| Magnesiumhydroxidcarbonat | 0,6 g |
| Kakaopulver (10/12) | 15 g |
| | 1000 g |

Zur Herstellung von 1 kg Teigmasse bringt man zunächst das Kochsalz sowie das Natriumbicarbonat und das Ammoniumbicarbonat als Triebmittel sowie das Magnesiumhydroxidcarbonat sowie den Zucker in Wasser ein und rührt diese Bestandteil während etwa 1 Minute unter gleichmässiger Zugabe des Sojamehls.

Anschliessend wird das Mehl, nämlich Weizen- und Roggenmehl, sowie das Vollmilchpulver, Weizenstärke und Kakaopulver in der wässrigen Lösung verteilt und dann das Erdnussöl und Lecithin als Emulgator zugegeben. Die so erhaltene Masse wird im Schlagwerk während 10 Minuten geschlagen. Die so erhaltene Teigmasse wird gegebenenfalls durch ein feines Sieb passiert, um die allenfalls noch in der Teigmasse enthaltenen kleinen Partikel, die die gleichmässige Struktur der Fertigwaffel beeinflussen könnten, zurückzuhalten. Anschliessend wird der Teig in dosierten Mengen auf das Waffeleisen aufgebracht, wobei das untere Waffeleisen eine Temperatur von 175°C und das obere Waffeleisen eine Temperatur von nur 160°C aufweisen. Die beiden Waffeleisen sind in ihrer Zuordnung während des Backvorgangs so eingestellt, dass sich eine Waffelstärke von 2,8 mm ergibt. Der Backvorgang ist nach 3 Minuten beendet.

Im vorliegenden Beispiel wurden zwei Waffeleisen unterschiedlicher Formgebung mit glatten Oberflächen zum Einsatz gebracht, um eine aus Ober- und Unterteil bestehende Hohlwaffel zu formen. Beide Waffeleisen sind in bekannter Weise zum gleichzeitigen Ausbacken einer grösseren Zahl von Hohlwaffelhälften ausgebildet. Diese Waffelbehälter werden mit geeigneten Vorrichtungen zu den einzelnen Waffelhälften geschnitten. Die Abmessung der Einzelwaffelhälften betrug 25 × 115 mm. Die Unterhälften der Waffeln wiesen im Querschnitt eine trapezförmige Formgebung auf, wobei sich die Seitenflächen unter etwa 30° über eine Länge von 5 mm schräg nach unten erstreckten. Eine derartig geformte Hohlwaffelhälfte wies bei beidseitiger Einspannung eine Bruchfestigkeit bei zentraler Belastung mit einem Flachstempel mit einer Querschnittsfläche von 3 cm² von im Mittel 260 g auf. Die obere Waffelhälfte war halbkreisförmig gestaltet, wobei sich das Gewölbe auf eine Höhe von etwa 12 mm erstreckt. Bei sonst gleichen Abmessungen des Oberteils (25 × 115 mm) betrug die Bruchfestigkeit bei Durchführung des gleichen Tests unter Verwendung eines an seiner Stirnfläche an die Aussenform der Waffeloberfläche angepassten Stempels im Mittel 385 g, bei einem Wassergehalt der Waffel von 5,0% $H_2O$ für das Oberteil.

Die erfindungsgemässen Waffeln weisen nicht nur eine beachtliche, für ihre Dicke von nur 2,5 bis 3 mm sogar überraschende Bruchfestigkeit auf, sondern zeichnen sich auch durch lang anhaltende gute organoleptische Eigenschaften aus. Auch bei längerer Lagerung im gefüllten oder ungefüllten Zustand behalten sie ihre Rösche und ihr Aussehen bei und erleiden keine geschmackliche Veränderung.

Die Bruchfestigkeit der erfindungsgemässen Waffel wurde mit Waffeln des Standes der Technik, nämlich von Waffeln, die auf dem Markt erhältlich sind, verglichen. Die Bruchbelastung wurde dabei mit einem Brabender-Plastograph unter Verwendung eines Federdruckes von 2 kg und einer Geschwindigkeit von 8,5 Sekunden durchgeführt. Die Steg-Distanz betrug 8 cm. Alle zu prüfenden Waffeln wurden vor der Prüfung 2 Stunden bei 100°C getrocknet und der Restwassergehalt nach der Durchführung der Messung bestimmt. Dieser Restwassergehalt schwankt bei den untersuchten Proben zwar geringfügig, jedoch dürften die unterschiedlichen Wassergehalte keinen Einfluss auf die gemessenen unterschiedlichen Bruchfestigkeiten haben.

Die Waffeln 1a und 1b sind erfindungsgemässe Waffeln. Dabei hat die Waffel 1a einen trapezförmigen Querschnitt und die Waffel 1b einen halbkreisförmigen, gewölbten Querschnitt. Die Waffeln 2 bis 8 hatten jeweils die gleiche Grösse wie die geprüften erfindungsgemässen Waffeln, jedoch unterschiedliche Stärken. Ausserdem hatten sie keine glatten Oberflächen, sondern wiesen Karree-Musterungen auf. Die Teigzusammensetzung der Vergleichswaffeln ist im einzelnen nicht bekannt, ebensowenig die genauen Herstellungsbedingungen. Es kann jedoch angenommen werden, dass grundsätzlich ähnliche Zusammensetzungen und Verfahrensbedingungen bei der Herstellung vorlagen wie bei den erfindungsgemässen Waffeln. Das unterschiedliche, bessere Verhalten der erfindungsgemässen Waffeln ist offensichtlich auf der Einhaltung der in den Patentansprüchen angegebenen Bedingungen zurückzuführen. Diese Bedingungen sind zwar zum Teil aus dem Stand der Technik bekannt, in Kombination ergeben sie aber die erfindungsgemässen Waffeln mit den fortschrittlichen und überlegenen Eigenschaften.

## Tabelle

| Produkt | Waffelgrösse | Bruch | bei$_g$ | Belastung | mit: | Mittelwert | %$H_2O$ |
|---|---|---|---|---|---|---|---|
| Waffel 1a | 90 × 25 mm × 2-3 | 280 | 230 | 230 | 300 | 260 | 5,0 |
| Waffel 1b | 90 × 25 mm × 2 | 380 | 390 | 360 | 410 | 385 | 4,0 |
| Waffel 2 | 90 × 25 mm × 5 | 90 | 85 | 80 | 85 | 85 | 3,7 |
| Waffel 3 | 90 × 25 mm × 3 | 60 | 60 | 65 | 60 | 61 | 3,8 |
| Waffel 4 | 90 × 25 mm × 2 | 25 | 25 | 25 | 25 | 25 | 4,9 |
| Waffel 5 | 90 × 25 mm × 2 | 45 | 40 | 40 | 40 | 41 | 4,6 |
| Waffel 6 | 90 × 25 mm × 4 | 200 | 220 | 200 | 210 | 208 | 4,4 |
| Waffel 7 | 90 × 25 mm × 4 | 230 | 225 | 230 | 205 | 223 | 3,1 |
| Waffel 8 | 90 × 25 mm × 4 | 210 | 200 | 215 | 210 | 209 | 3,6 |

## Patentansprüche

1. Waffel mit glatter dichter Oberfläche und einer zellenartigen Innenstruktur zur Verwendung als gefüllte Waffel aus zwei oder mehreren Waffelblättern, wobei bei einer Waffelgrösse von 25 × 110 mm und einer Wandstärke von 2,8 mm und bei Fixierung der Waffelhälften am Rand und einer mittigen Belastung auf einer Fläche von 3 cm² eine trapezförmige Waffelhälfte eine Bruchfestigkeit von mindestens 230 g und eine halbkreisförmige Waffelhälfte eine Bruchfestigkeit von mindestens 360 g hat, erhältlich mittels folgender Verfahrensschritte:

1. Herstellung eines Teiges durch

1.1. Einbringen von Würzmittel, Backtriebmittel in einer Menge von 0,08 Gew.-%, bezogen auf den fertigen Teig, Zucker als Süssungsmittel in einer Menge von nicht mehr als 1,2 Gew.-%, ebenfalls bezogen auf Teigmasse, in Wasser und Rühren dieser Bestandteile unter Zugabe von Sojamehl;

1.2. Verteilen von Mehl und Vollmilchpulver in der wässrigen Lösung gemäss 1.1., wobei das Verhältnis von Wasser zu Mehl 1,6 : 1 beträgt;

1.3. Zugeben von Pflanzenölen in einem Verhältnis von Pflanzenöl zu Mehl von 7 : 100 und einem Emulgator für das Öl in einer Menge von 4 bis 8 Gew.-% Emulgator, bezogen auf das Ölgewicht;

1.4. Schlagen der so erhaltenen Masse in einem Schlagwerk;

2. Aufbringen des Teiges in dosierten Mengen auf die Waffeleisen mit wenigstens einer glatten Oberfläche, wobei zwischen den unteren und oberen Waffeleisen eine Temperaturdifferenz von 10 bis 20°C vorliegt und wobei das kältere Waffeleisen eine Temperatur von mindestens 150°C hat;

3. Ausbacken des Teiges in Waffeleisen während einer Dauer von 2,5 bis 3 Minuten auf eine Waffelstärke von 2,5 bis 3 mm.

2. Waffel nach Anspruch 1, dadurch gekennzeichnet, dass bei der Teigherstellung ein Gemisch aus je 0,04 Gew.-% Natriumbicarbonat und 0,04 Gew.-% Ammoniumbicarbonat, bezogen auf die Teigmasse, als Backtriebmittel verwendet wurde.

3. Waffel nach einem der vorhergehenden Ansprüche, dadurch gekennzeichnet, dass bei der Teigherstellung Magnesiumhydroxidcarbonat, vorzugsweise in einer Menge von 0,06 Gew.-%, bezogen auf die Teigmasse, verwendet wurde.

4. Waffel nach einem oder mehreren der vorhergehenden Ansprüche, dadurch gekennzeichnet, dass bei der Teigherstellung gemäss Stufe 1.2. ein Gemisch aus einer überwiegenden Weizenmehlmenge unter Zugabe einer kleinen Roggenmehlmenge, vorzugsweise in einer Mischung von 94 Gew.-% zu 6 Gew.-%, verwendet wurde.

5. Waffel nach Anspruch 4, dadurch gekennzeichnet, dass 32 Gew.-% Weizenmehl und 2 Gew.-% Roggenmehl, bezogen auf die Teigmasse, verwendet wurden.

6. Waffel nach einem oder mehreren der vorhergehenden Ansprüche, dadurch gekennzeichnet, dass bei der Teigherstellung zusätzlich Weizenstärke, vorzugsweise in einer Menge von 1 Gew.-% bezogen auf die Teigmasse, verwendet wurde.

7. Waffel nach einem oder mehreren der vorhergehenden Ansprüche, dadurch gekennzeichnet, dass bei der Teigherstellung als Pflanzenöl Erdnussöl, vorzugsweise in einer Menge von 2,4 Gew.-%, und als Emulgator Lecithin, vorzugsweise in einer Menge von 0,15 Gew.-%, jeweils bezogen auf die Teigmasse, verwendet wurden.

8. Waffel nach einem oder mehreren der vorhergehenden Ansprüche, dadurch gekennzeichnet, dass bei der Teigherstellung in Stufe 1.4. 10 Minuten geschlagen wurde.

9. Waffel nach einem oder mehreren der vorhergehenden Ansprüche, dadurch gekennzeichnet, dass das untere Waffeleisen auf 175°C und das obere Waffeleisen auf 160°C aufgeheizt wurden.

10. Waffel nach Anspruch 9, dadurch gekennzeichnet, dass die Waffeleisen mit vergrösserten Dampfaustrittsoberflächen zur Gewährleistung eines erhöhten Dampfaustritts während des Backvorganges versehen waren.

11. Waffel nach einem oder mehreren der vorhergehenden Ansprüche, dadurch gekennzeichnet, dass bei der Teigherstellung dem Teig zusätzlich 1,5 Gew.-% Kakaopulver (10/12), bezogen auf die Teigmasse, zugegeben wurden.

12. Waffel nach einem oder mehreren der vorhergehenden Ansprüche, dadurch gekennzeichnet, dass die Waffel als Hohlwaffel aus zwei Waffelhälften ausgebildet ist.

13. Waffel nach einem oder mehreren der vorhergehenden Ansprüche, dadurch gekennzeichnet, dass mindestens die die Aussenhaut der Waffelblätter bzw. Waffelhälften erzeugenden Oberflächen der Waffeleisen glatt sind.

14. Waffel nach Anspruch 13, dadurch gekennzeichnet, dass sie aus zwei Waffelhälften unterschiedlichen Querschnitts besteht.

15. Waffel nach Anspruch 14, dadurch gekennzeichnet, dass die untere Waffelhälfte einen trapezförmigen Querschnitt und die obere Waffelhälfte einen halbkreisförmigen gewölbten Querschnitt haben.

16. Waffel mit glatter dichter Oberfläche und einer zellenartigen Innenstruktur zur Verwendung als gefüllte Waffel, bestehend aus zwei die Nahrungsmittelmasse aufnehmenden Waffelhälften, wobei bei einer Waffelgrösse von 25 × 110 mm und einer Wandstärke von 2,8 mm und bei Fixierung der Waffelhälften am Rand und einer mittigen Belastung auf einer Fläche von 3 cm² eine trapezförmige Waffelhälfte eine Bruchfestigkeit von mindestens 230 g und eine halbkreisförmige Waffelhälfte eine Bruchfestigkeit von mindestens 360 g hat, hergestellt mittels folgender Verfahrensschritte:

1. Herstellung des Teiges (1 kg) durch
1.1. Einbringen von 1 g Kochsalz, je 0,4 g Natriumbicarbonat und Ammoniumbicarbonat sowie 0,6 g Magnesiumhydroxidcarbonat sowie 12 g Zucker in 560 g Wasser durch Rühren dieser Bestandteile während einer Minute unter gleichzeitiger Zugabe von 16,5 g Sojamehl;
1.2 Verteilen von 322,1 g Weizenmehl (Type 550), 20 g Roggenmehl (Type 815), 16,5 g Vollmilchpulver, 10 g Weizenstärke und 15 g Kakaopulver 10/12 in der wässrigen Lösung gemäss 1.1.
1.3. Zugeben von 24 g Erdnussöl und 1,5 g Lecithin als Emulgator für das Öl;
1.4. Schlagen der so erhaltenen Masse im Schlagwerk während 10 Minuten;
2. Aufbringen des Teiges in dosierten Mengen auf die entsprechend geformten Waffeleisen, wobei
2.1. das untere Waffeleisen auf eine Temperatur von 175°C,
2.2. das obere Waffeleisen auf eine Temperatur von 160°C aufgeheizt sind;
3. Ausbacken des Teiges im Waffeleisen während einer Dauer von 2,5 bis 3 Minuten auf eine Waffelstärke von 2,5 bis 3 mm.

17. Verfahren zur Herstellung einer Waffel mit glatter dichter Oberfläche und einer zellenartigen Innenstruktur zur Verwendung als gefüllte Waffel aus zwei oder mehreren Waffelblättern, wobei bei einer Waffelgrösse von 25 × 110 mm und einer Wandstärke von 2,8 mm und bei Fixierung der Waffelhälften am Rand und einer mittigen Belastung auf einer Fläche von 3 cm² eine trapezförmige Waffelhälfte eine Bruchfestigkeit von mindestens 230 g und eine halbkreisförmige Waffelhälfte eine Bruchfestigkeit von mindestens 360 g hat, gekennzeichnet, durch folgende Verfahrensschritte:

1. Herstellung des Teiges durch

1.1. Einbringen von Würzmittel, Backtreibmittel in einer Menge von 0,08 Gew.-%, bezogen auf den fertigen Teig, Zucker als Süssungsmittel in einer Menge von nicht mehr als 1,2 Gew.-%, ebenfalls bezogen auf Teigmasse, in Wasser und Rühren dieser Bestandteile unter Zugabe von Sojamehl;
1.2. Verteilen von Mehl und Vollmilchpulver in der wässrigen Lösung gemäss 1.1., wobei das Verhältnis von Wasser zu Mehl 1,6 : 1 beträgt;
1.3. Zugeben von Pflanzenölen in einem Verhältnis von Pflanzenöl zu Mehl von 7 : 100 und einem Emulgator für das Öl in einer Menge von 4 bis 8 Gew.-% Emulgator, bezogen auf das Ölgewicht;

1.4. Schlagen der so erhaltenen Masse in einem Schlagwerk;

2. Aufbringen des Teiges in dosierte Mengen auf die Waffeleisen mit wenigstens einer glatten Oberfläche, wobei zwischen den unteren und oberen Waffeleisen eine Temperaturdifferenz von 10 bis 20°C vorliegt und wobei das kältere Waffeleisen eine Temperatur von mindestens 150°C hat;

3. Ausbacken des Teiges in Waffeleisen während einer Dauer von 2,5 bis 3 Minuten auf eine Waffelstärke von 2,5 bis 3 mm.

18. Verfahren gemäss Anspruch 17, dadurch gekennzeichnet, dass man bei der Teigherstellung ein Gemisch aus je 0,04 Gew.-% Natriumbicarbonat und 0,04 Gew.-% Ammoniumbicarbonat, bezogen auf die Teigmasse, als Backtriebmittel verwendet.

19. Verfahren gemäss Anspruch 18, dadurch gekennzeichnet, dass man bei der Teigherstellung Magnesiumhydroxidcarbonat, vorzugsweise in einer Menge von 0,06 Gew.-% bezogen auf die Teigmasse, verwendet.

20. Verfahren nach einem oder mehreren der Ansprüche 17 bis 19, dadurch gekennzeichnet, dass man bei der Teigherstellung gemäss Stufe 1.2. ein Gemisch aus einer überwiegenden Weizenmehlmenge unter Zugabe einer kleinen Roggenmehlmenge, vorzugsweise in einer Mischung von 94 Gew.-% zu 6 Gew.-%, verwendet.

21. Verfahren nach Anspruch 20, dadurch gekennzeichnet, dass man 32 Gew.-% Weizenmehl und 2 Gew.-% Roggenmehl, bezogen auf die Teigmasse, verwendet.

22. Verfahren nach einem oder mehreren der Ansprüche 17 bis 21, dadurch gekennzeichnet, dass man bei der Teigherstellung zusätzlich Weizenstärke, vorzugsweise in einer Menge von 1 Gew.-%, bezogen auf die Teigmasse, verwendet.

23. Verfahren nach einem oder mehreren der Ansprüche 17 bis 22, dadurch gekennzeichnet, dass man bei der Teigherstellung als Pflanzenöl Erdnussöl, vorzugsweise in einer Menge von 2,4 Gew.-%, und als Emulgator Lecithin, vorzugsweise in einer Menge von 0,15 Gew.-%, jeweils bezogen auf die Teigmasse, verwendet.

24. Verfahren nach einem oder mehreren der Ansprüche 17 bis 23, dadurch gekennzeichnet, dass man bei der Teigherstellung bei Stufe 1.4. 10 Minuten schlägt.

25. Verfahren nach einem oder mehreren der Ansprüche 17 bis 24, dadurch gekennzeichnet, dass man Waffeleisen verwendet, bei denen mindestens die die Aussenhaut der Waffel erzeugenden Oberflächen glatt sind.

26. Verfahren nach einem oder mehreren der Ansprüche 17 bis 25, dadurch gekennzeichnet, dass man das untere Waffeleisen auf 175°C und das obere Waffeleisen auf 160°C aufheizt.

27. Verfahren nach Anspruch 26, dadurch gekennzeichnet, dass man Waffeleisen mit vergrösserten Dampfaustrittsoberflächen zur Gewährleistung eines erhöhten Dampfaustritts während des Backvorganges verwendet.

28. Verfahren nach einem oder mehreren der Ansprüche 17 bis 24, dadurch gekennzeichnet, dass man bei der Teigherstellung dem Teig zusätzlich 1,5 Gew.-% Kakaopulver (10/12), bezogen auf die Teigmasse, zugibt.

29. Verfahren nach Anspruch 28, dadurch gekennzeichnet, dass man die Waffel als Hohlwaffel ausbildet.

30. Verfahren nach Anspruch 29, dadurch gekennzeichnet, dass man zwei Waffelhälften unterschiedlichen Querschnitts herstellt.

31. Verfahren nach Anspruch 30, dadurch gekennzeichnet, dass man die untere Waffelhälfte mit einem trapezförmigen Querschnitt und die obere Waffelhälfte mit einem halbkreisförmigen Querschnitt herstellt.

32. Verfahren zur Herstellung einer Waffel mit glatter dichter Oberfläche und einer zellenartigen Innenstruktur zur Verwendung als gefüllte Waffel, bestehend aus zwei die Nahrungsmittelmasse aufnehmende Waffelhälften, hergestellt mittels folgender Verfahrensschritte:

1. Herstellung des Teiges (1 kg) durch

1.1. Einbringen von 1 g Kochsalz, je 0,4 g Natriumbicarbonat und Ammoniumbicarbonat sowie 0,6 g Magnesiumhydroxidcarbonat sowie 12 g Zucker in 560 g Wasser durch Rühren dieser Bestandteile während einer Minute unter gleichzeitiger Zugabe von 16,5 g Sojamehl.

1.2. Verteilen von 322,1 g Weizenmehl (Type 550), 20 g Roggenmehl (Type 815), 16,5 g Vollmilchpulver, 10 g Weizenstärke und 15 g Kakaopulver 10/12 in der wässrigen Lösung gemäss 1.1.

1.3. Zugeben von 24 g Erdnussöl und 1,5 g Lecithin als Emulgator für das Öl;

1.4. Schlagen der so erhaltenen Masse im Schlagwerk während 10 Minuten;

2. Aufbringen des Teiges in dosierten Mengen auf die entsprechend geformten Waffeleisen, wobei

2.1. das untere Waffeleisen auf eine Temperatur von 175°C,

2.2. das obere Waffeleisen auf eine Temperatur von 160°C aufgeheizt sind;

3. Ausbacken des Teiges im Waffeleisen während einer Dauer von 2,5 bis 3 Minuten auf eine Waffelstärke von 2,5 bis 3 mm.

**Claims**

1. Waffle having a smooth closed surface and a cellular inner structure for use as a filled waffle of two or more waffle leaves wherein for a waffle size of 25 × 110 mm and a wall thickness of 2.8 mm, when the waffle halves are held at the edge and a central load is applied to an area of 3 cm², the trapezoidal waffle half has a breaking strength of at least 230 g and the semicircular waffle half has a breaking strength of at least 360 g, obtainable by means of the following process steps:

1. Preparation of a dough by
1.1. introduction of seasoning, leavening agents in an amount of 0.08% by weight based on the dough mass and sugar as sweetener in an amount of not more than 1.2% by weight also based on the dough mass into water and stirring of these constituents, with addition of soya flour;
1.2. distribution of flour and whole milk powder in the aqueous solution according to 1.1., the ratio of water to flour being 1.6:1,
1.3. addition of vegetable oil in a ratio of vegetable oil to flour of 7:100 and an emulsifier for the oil in an amount of 4 to 8% by weight of emulsifier, based on the weight of oil;
1.4. beating of the resulting mass in a beater;
2. application of metered amounts of the dough to the waffle irons with at least one smooth surface, there being a temperature difference of 10 to 20°C between the top and bottom waffle irons and the colder waffle iron having a temperature of at least 150°C;
3. baking of the dough in waffle irons for a period of 2.5 to 3 minutes to a waffle thickness of 2.5 to 3 mm.

2. Waffle according to Claim 1, characterised in that a mixture of in each case 0.04% by weight of sodium bicarbonate and 0.04% by weight of ammonium bicarbonate, based on the dough mass, was used as the leavening agent in the dough preparation.

3. Waffle according to one of the preceding claims, characterised in that magnesium hydroxide carbonate, preferably in an amount of 0.06% by weight, based on the dough mass, was used in the dough preparation.

4. Waffle according to one of more of the preceding claims, characterised in that a mixture of a predominant amount of wheat flour, with addition of a small amount of rye flour, preferably in a mixture of 94% by weight to 6% by weight, was used in the dough preparation according to Stage 1.2.

5. Waffle according to Claim 4, characterised in that 32% by weight of wheat flour and 2% by weight of rye flour, based on the dough mass, were used.

6. Waffle according to one or more of the preceding claims, characterised in that wheat starch, preferably in an amount of 1% by weight, based on the dough mass, was additionally used in the dough preparation.

7. Waffle according to one or more of the preceding claims, characterised in that, in the dough preparation, groundnut oil, preferably in an amount of 2.4% by weight, was used as the vegetable oil and lecithin, preferably in an amount of 0.15% by weight, was used as the emulsifier, each amount being based on the dough mass.

8. Waffle according to one or more of the preceding claims, characterised in that beating was carried out for 10 minutes in the dough preparation in Stage 1.4.

9. Waffle according to one or more of the preceding claims, characterised in that the bottom waffle iron was heated up to 175°C and the top waffle iron was heated up to 160°C.

10. Waffle according to Claim 9, characterised in that the waffle irons were provided with enlarged steam outlet surfaces to ensure an increased outlet of steam during the baking operation.

11. Waffle according to one or more of the preceding claims, characterised in that 1.5% by weight of cocoa powder (10/12), based on the dough mass, was additionally added to the dough in the dough preparation.

12. Waffle according to one or more of the preceding claims, characterised in that the waffle is in the form of a hollow waffle of two waffle halves.

13. Waffle according to one or more of the preceding claims, characterised in that at least the surfaces of the waffle irons producing the outer skin of the waffle leaves or waffle halves are smooth.

14. Waffle according to Claim 13, characterised in that it consists of two waffle halves of different cross-section.

15. Waffle according to Claim 14, characterised in that the bottom waffle half has a trapezoidal cross-section and the top waffle half has a semi-circular domed cross-section.

16. Waffle having a smooth closed surface and a cellular inner structure for use as a filled waffle, consisting of two waffle halves which accommodate the foodstuff composition wherein for a waffle size of 25 × 110 mm and a wall thickness of 2.8 mm, when the waffle halves are held at the edge and a central load is applied to an area of 3 cm², the trapezoidal waffle half has a breaking strength of at least 230 g and the semi-circular waffle half has a breaking strength of at least 360 g, prepared by means of the following process steps:

1. Preparation of the dough (1 kg) by
1.1. introduction of 1 g of sodium chloride, in each case 0.4 g of sodium bicarbonate and ammonium bicarbonate, 0.6 g of magnesium hydroxide carbonate and 12 g of sugar into 560 g of water by stirring these constituents for one minute, with simultaneous addition of 16.5 g of soya flour;
1.2. distribution of 322.1 g of wheat flour (grade 550), 20 g of rye flour (grade 815), 16.5 g of whole milk powder, 10 g of wheat starch and 15 g of cocoa powder 10/12 in the aqueous solution according to 1.1.;
1.3. addition of 24 g of groundnut oil and 1.5 g of lecithin as an emulsifier for the oil;
1.4. beating of the resulting composition in a beater for 10 minutes;
2. application of metered amounts of the dough onto the appropriately shaped waffle irons,

2.1. the bottom waffle iron being heated up to a temperature of 175°C and

2.2. the top waffle iron being heated up to a temperature of 160°C;

3. baking the dough in waffle iron for a period of 2.5 to 3 minutes to a waffle thickness of 2.5 to 3 mm.

17. Process for the preparation of a waffle having a smooth closed surface and a cellular inner structure for use as a filled waffle of two or more waffle leaves, wherein for a waffle size of 25 × 110 mm and a wall thickness of 2.8 mm, when the waffle halves are held at the edge and a central load is applied to an area of 3 cm², the trapezoidal waffle half has a breaking strength of at least 230 g and the semi-circular waffle half has a breaking strength of at least 360 g, characterised by the following process steps:

1. Preparation of a dough by

1.1. introduction of seasoning, leavening agents in an amount of 0.08% by weight based on the dough mass and sugar as sweetener in an amount of not more than 1.2% also based on the dough mass into water and stirring of these constituents, with addition of soya flour;

1.2. distribution of flour and whole milk powder in the aqueous solution according to 1.1., the ratio of water to flour being 1.6:1,

1.3. addition of vegetable oil in a ratio of vegetable oil to flour of 7:100 and an emulsifier for the oil in an amount of 4 to 8% by weight of emulsifier, based on the weight of oil;

1.4. beating of the resulting composition in a beater;

2. application of metered amounts of the dough to the waffle irons with at least one smooth surface, there being a temperature difference of 10 to 20°C between the top and bottom waffle irons and the colder waffle iron having a temperature of at least 150°C;

3. baking of the dough in waffle irons for a period of 2.5 to 3 minutes to a waffle thickness of 2.5 to 3 mm.

18. Process according to Claim 17, characterised in that a mixture of in each case 0.04% by weight of sodium bicarbonate and 0.04% by weight of ammonium bicarbonate, based on the dough mass, is used as the leavening agent in the dough preparation.

19. Process according to Claim 18, characterised in the magnesium hydroxide carbonate, preferably in an amount of 0.06% by weight, based on the dough mass, is used in the dough preparation.

20. Process according to one or more of Claims 17 to 19, characterised in that a mixture of a predominant amount of wheat flour, with addition of a small amount of rye flour, preferably in a mixture of 94% by weight to 6% by weight, is used in the dough preparation according to Stage 1.2.

21. Process according to Claim 20, characterised in that 32% by weight of wheat flour and 2% by weight of rye flour, based on the dough mass, are used.

22. Process according to one or more of Claims 17 to 21, characterised in that wheat starch, preferably in an amount of 1% by weight, based on the dough mass, is additionally used in the dough preparation.

23. Process according to one or more of Claims 17 to 22, characterised in that, in the dough preparation, groundnut oil, preferably in an amount of 2.4% by weight, is used as a vegetable oil and lecithin, preferably in an amount of 0.15% by weight, is used as the emulsifier, each amount being based on the dough mass.

24. Process according to one or more of Claims 17 to 23, characterised in that beating is carried out for 10 minutes in the dough preparation in Stage 1.4.

25. Process according to one or more of Claims 17 to 24, characterised in that waffle irons in which at least the surfaces producing the outer skin of the waffle are smooth.

26. Process according to one or more of Claims 17 to 25, characterised in that the bottom waffle iron is heated up to 175°C and the top waffle iron is heated up to 160°C.

27. Process according to Claim 26, characterised in that waffle irons with enlarged steam outlet surfaces are used to ensure increased outlet of steam during the baking operation.

28. Process according to one or more of Claims 17 to 24, characterised in that 1.5% by weight of cocoa powder (10/12), based on the dough mass, is additionally added to the dough in the dough preparation.

29. Process according to Claim 28, characterised in that the waffle is in the form of a hollow waffle.

30. Process according to Claim 29, characterised in that two waffle halves of different cross-section are prepared.

31. Process according to Claim 30, characterised in that the bottom waffle half is prepared with a trapezoidal cross-section and the top waffle half is prepared with a semi-circular cross-section.

32. Process for the preparation of a waffle having a smooth closed surface and a cellular inner structure for use as a filled waffle, consisting of two waffle halves which accomodate the foodstuff composition, prepared by means of the following process steps:

1. Preparation of the dough (1 kg) by

1.1. introduction of 1 g of sodium chloride, in each case 0.4 g of sodium bicarbonate and ammonium bicarbonate, 0.6 g of magnesium hydroxide carbonate and 12 g of sugar into 560 g of water by stirring these constituents for one minute, with simultaneous addition of 16.5 g of soya flour;

1.2. distribution of 322.1 g of wheat flour (grade 550), 20 g of rye flour (grade 815), 16.5 g of whole milk powder, 10 g of wheat starch and 15 g of cocoa powder 10/12 in the aqueous solution according to 1.1.;

1.3. addition of 24 g of groundnut oil and 1.5 g of lecithin as an emulsifier for the oil;

1.4. beating of the resulting composition in a beater for 10 minutes;

2. application of metered amounts of the dough onto the appropriately shaped waffle irons,

2.1. the bottom waffle iron being heated up to a temperature of 175°C and

2.2. the top waffle iron being heated up to a temperature of 160°C;

3. baking the dough in the waffle iron for a period of 2.5 to 3 minutes to a waffle thickness of 2.5 to 3 mm.

## Revendications

1. Gaufre à surface dense et lisse et structure intérieure alvéolaire, destinée à être utilisée sous la forme de gaufre fourrée consistant en deux ou plusieurs feuilles de gaufre, dans le cas de laquelle, à des dimensions de gaufres de 25 × 110 mm et une épaisseur de paroi de 2,8 mm, les moitiés de gaufre étant fixées au bord et soumises à une charge centrale sur une surface de 3 cm², une moitié de gaufre en forme de trapèze présente une résistance à la rupture d'au moins 230 g et une moitié de gaufre de semi-circulaire présente une résistance à la rupture d'au moins 360 g, susceptible d'être obtenue à l'aide des stades opératoires suivants:

1. Préparation d'une pâte par
1.1. Introduction de condiments, de levure de boulangerie, à raison de 0,08% en poids de levure de boulangerie par rapport à la pâte terminée, de sucre en tant qu'agent édulcorant, à raison de pas plus de 1,2% en poids, également par rapport à la masse de pâte, dans l'eau et agitation de ces constituants sous adjonction de farine de soja;
1.2. Dispersion de farine et de poudre de lait entier dans la solution aqueuse obtenue en 1.1., à un rapport eau/farine de 1,6 : 1;
1.3. Addition d'huile végétale dans un rapport huile végétale/farine de 7 : 100 et d'un agent émulsionnant pour l'huile, en quantités de 4 à 8% en poids d'agent émulsionnant par rapport au poids de l'huile;
1.4. Battage de la masse ainsi obtenue dans un batteur.
2. Application de la pâte en quantités dosées sur les fers à gaufres ayant au moins une surface lisse, avec une différence de température de 10 à 20°C entre

2. Gaufre selon la revendication 1, caractérisée en ce que, lors de la préparation de la pâte, on utilise comme levure de boulangerie un mélange de 0,04% en poids de bicarbonate de sodium et 0,04% en poids de bicarbonate d'ammonium, dans les deux cas par rapport à la masse de pâte.

3. Gaufre selon l'une quelconque des revendications 1 et 2, caractérisée en ce que, lors de la préparation de la pâte, on utilise du carbonate basique de magnésium, de préférence en quantité de 0,06% du poids de la masse de pâte.

4. Gaufre selon l'une quelconque des revendications 1 à 3, caractérisée en ce que, lors de la préparation de la pâte, au stade opératoire 1.2., on utilise un mélange d'une quantité prépondérante de farine de blé et d'une petite quantité de farine de seigle, de préférence dans des proportions relatives de 94% en poids pour 6% en poids.

5. Gaufre selon la revendication 4, caractérisée en ce que l'on utilise 32% en poids de farine de blé et 2% en poids de farine de seigle par rapport à la masse de la pâte.

6. Gaufre selon l'une quelconque des revendications 1 à 5, caractérisée en ce que, lors de la préparation de la pâte, on utilise en outre de l'amidon de blé, de préférence en quantité de 1% du poids de la masse de pâte.

7. Gaufre selon l'une quelconque des revendications 1 à 6, caractérisée en ce que, lors de la préparation de la pâte, on utilise comme huile végétale de l'huile d'arachide, de préférence en quantité de 2,4% en poids, et en tant qu'agent émulsionnant de la lécithine, de préférence en quantité de 0,15% en poids, dans les deux cas par rapport à la masse de la pâte.

8. Gaufre selon l'une quelconque des revendications 1 à 7, caractérisée en ce que, lors de la préparation de la pâte, au stade opératoire 1.4., on bat pendant 10 mn.

9. Gaufre selon l'une quelconque des revendications 1 à 8, caractérisée en ce que le fer à gaufre inférieur est chauffée à 175°C et le fer à gaufre supérieur à 160°C.

10. Gaufre selon la revendication 9, caractérisée en ce que les fers à gaufres portent des surfaces d'évacuation de la vapeur d'eau qui sont agrandies pour assurer une plus forte évacuation de vapeur au cours de l'opération de cuisson.

11. Gaufre selon l'une quelconque des revendications 1 à 10, caractérisée en ce que, lors de la préparation de la pâte, on ajoute en outre à celle-ci 1,5% en poids de poudre de cacao (10/12) par rapport à la masse de pâte.

12. Gaufre selon l'une quelconque des revendications 1 à 11, caractérisée en ce que la gaufre présente la forme d'une gaufre creuse consistant en deux moities de gaufre.

13. Gaufre selon l'une quelconque des revendications 1 à 12, caractérisée en ce qu'au moins les surfaces des fers à gaufres formant la peau extérieure des feuilles de gaufres ou moitiés des gaufres sont lisses.

14. Gaufre selon la revendication 13, caractérisée en ce qu'elle consiste en deux moitiés de gaufre de sections différentes.

15. Gaufre selon la revendication 14, caractérisée en ce que la moitié de gaufre inférieure possède une section en forme de trapèze et la moitié de gaufre supérieure une section bombée de forme semi-circulaire.

16. Gaufre à surface dense et lisse et structure intérieure alvéolaire destinée à être utilisée sous la forme de gaufre fourrée consistant en deux moitiés de gaufre à garnir de la masse alimentaire, dans le cas de laquelle, à des dimensions de gaufres de 25 × 100 mm et une épaisseur de paroi de 2,8 mm, les moitiés de gaufre étant fixées au bord et soumises à une charge centrale sur une surface de 3 cm², une moitié de gaufre en forme de trapèze présente une résistance à la rupture d'au moins 230 g et une moitié de gaufre de forme semicirculaire présente une résistance à la rupture d'au moins 360 g, préparée à l'aide des stades opératoires suivants:

1. Préparation de la pâte (1 kg) par
1.1. Introduction d'1 g de sel de cuisine, 0,4 g de bicarbonate de sodium et 0,4 g de bicarbonate d'ammonium et 0,6 g de carbonate basique de magnésium et 12 g de sucre dans 560 g d'eau par agitation de ces constituants perdant 1 mn avec addition simultanée de 16,5 g de farine de soja;
1.2. Dispersion de 322 g de farine de blé (type 550), 20 g de farine de seigle (type 815), 16,5 g de poudre de lait entier, 10 g d'amidon de blé et 15 g de poudre de cacao 10/12 dans la solution aqueuse obtenue en 1.1.;
1.3. Addition de 24 g d'huile d'arachide et 1,5 g de lécithine servant d'agent émulsionnant pour l'huile;
1.4. Battage de la masse obtenue au batteur pendant 10 mn;
2. Application de la pâte en quantités dosées sur les fers à gaufres à la forme voulue,
2.1. Le fer à gaufre inférieur étant chauffé à une température de 175°C,
2.2. Le fer à gaufre supérieur étant chauffé à une température de 160°C;
3. Cuisson de la pâte dans les fers à gaufres pendant une durée de 2,5 à 3 minutes en une gaufre d'épaisseur de 2,5 à 3 mm.

17. Procédé de préparation d'une gaufre à surface dense et lisse et structure intérieure alvéolaire destinée à être utilisée sous la forme de gaufre fourrée consistant en deux ou plusieurs feuilles de gaufres, dans le cas de laquelle, à des dimensions de gaufres de 25 × 100 mm et une épaisseur de paroi de 2,8 mm, les moitiés de gaufre étant fixées au bord et soumises à une charge centrale sur une surface de 3 cm², une moitié de gaufre en forme de trapèze présente une résistance à la rupture d'au moins 230 g et une moitié de gaufre de forme semi-circulaire présente une résistance à la rupture d'au moins 360 g, caractérisée par les stades opératoires suivants:

1. Préparation d'une pâte par
1.1. Introduction de condiments, de levure de boulangerie, à raison de 0,08% en poids de levure de boulangerie par rapport à la pâte finie, de sucre à titre d'agent édulcorant à raison de pas plus de 1,2% en poids, également par rapport à la mousse de pâte, dans l'eau et agitation de ces constituants sans adjonction de farine de soja;
1.2. Dispersion de farine et de poudre de lait entier dans la solution aqueuse obtenue en 1.1., à des proportions eau/farine de 1,6:1;
1.3. Addition d'huile végétale dans un rapport huile générale/farine de 7:100 et d'un agent émulsionnant pour l'huile, en quantités de 4 à 8% en poids d'agent émulsionnant par rapport au poids de l'huile;
1.4. Battage de la masse ainsi obtenue dans un batteur.
2. Application de la pâte en quantités dosées sur les fers à gaufres ayant au moins une surface lisse, avec une différence de température de 10 à 20°C entre le fer à gaufre inférieur et le fer à gaufre supérieur, le fer à gaufre le moins chaud étant à une température d'au moins 150°C.
3. Cuisson de la pâte dans les fers à gaufres en une durée de 2,5 à 3 min. en une gaufre d'épaisseur 2,5 à 3 mm.

18. Procédé selon la revendication 17, caractérisé en ce que, lors de la préparation de la pâte, on utilise comme levure de boulangerie un mélange de 0,04% en poids de bicarbonate de sodium et 0,04% en poids de bicarbonate d'ammonium, dans les deux cas par rapport à la masse de pâte.

19. Procédé selon la revendication 18, caractérisé en ce que, lors de la préparation de la pâte, on utilise du carbonate basique de magnésium, de préférence en quantité de 0,06% du poids de la masse de pâte.

20. Procédé selon l'une quelconque des revendications 17 à 19, caractérisé en ce que, lors de la préparation de la pâte, au stade opératoire 1.2., on utilise un mélange d'une quantité prépondérante de farine de blé et d'une petite quantité de farine de seigle, de préférence dans des proportions relatives de 94% en poids et 6% en poids.

21. Procédé selon la revendication 20, caractérisé en ce qu'on utilise 32% en poids de farine de blé et 2% en poids de farine de seigle, par rapport à la masse de pâte.

22. Procédé selon l'une quelconque des revendications 17 à 21, caractérisé en ce que, lors de la préparation de la pâte, on utilise en outre de l'amidon de blé, de préférence en quantité de 1% du poids de la masse de pâte.

23. Procédé selon l'une quelconque des revendications 17 à 22, caractérisé en ce que, lors de la préparation de la pâte, on utilise comme huile végétale de l'huile d'arachide, de préférence en quantité de 2,4% en poids, et comme agent émulsionnant de la lécithine, de préférence en quantité de 0,15% en poids, dans les deux cas par rapport à la masse de pâte.

24 Procédé selon l'une quelconque des revendications 17 à 29, caractérisé en ce que, lors de la preparation de la pâte, au stade opératoire 1.4., on bat pendant 10 mn.

25. Procédé selon l'une quelconque des revendications 17 à 24, caractérisé en ce que l'on utilise des fers à gaufres dans lesquels au moins les surfaces formant la peau extérieure des gaufres sont lisses.

26. Procédé selon l'une quelconque des revendications 17 à 25, caractérisé en ce que l'on chauffe le fer à gaufre inférieur à 175°C et le fer à gaufre supérieur à 160°C.

27. Procédé selon la revendication 26, caractérisé en ce que l'on utilise des fers à gaufres dont les surfaces d'évacuation de la vapeur d'eau ont été agrandies afin d'assurer une plus forte évacuation de vapeur au cours de l'opération de cuisson.

28. Procédé selon l'une quelconque des revendications 17 à 24, caractérisé en ce que, lors de la préparation de la pâte, on ajoute en outre à celle-ci 1% en poids de poudre de cacao (10/12) par rapport à la masse de pâte.

29. Procédé selon la revendication 26, caractérisé en ce que l'on confère à la gaufre la forme de gaufre creuse.

30. Procédé selon la revendication 29, caractérisé en ce que l'on prépare deux moitiés de gaufre de sections différentes.

31. Procédé selon la revendication 30, caractérisé en ce que l'on prépare la moitié de gaufre inférieure avec une section en forme de trapèze et la moitié de gaufre supérieure avec une section en forme à semi-circulaire.

32. Procédé de préparation d'une gaufre à surface lisse et dense, et structure alvéolaire destinée à être utilisée comme gaufre fourrée, consistant en deux moitiés de gaufre à fourrer d'une masse alimentaire, caractérisé en ce qu'il comprend les stades opératoires suivants:

1. Préparation de la pâte (1 kg) par
1.1. Introduction d'1 g de sel de cuisine, 0,4 g de bicarbonate de sodium et 0,4 g de bicarbonate d'ammonium, 0,6 g de carbonate basique de magnésium et 12 g de sucre dans 560 g d'eau par agitation de ces constituants durant 1 mn sous adjonction simultanée de 16,5 g de farine de soja;
1.2. Dispersion de 322 g de farine de blé (type 550), 20 g de farine de seigle (type 815), 16,5 g de poudre de lait entier, 10 g d'amidon de blé et 15 g de poudre de cacao 10/12 dans la solution aqueuse obtenue en 1.1.;
1.3. Addition de 24 g d'huile d'arachide et 1,5 g de lécithine qui sert d'agent émulsionnant pour l'huile;
1.4. Battage de la masse obtenue au batteur pendant 10 mn;
2. Application de la pâte en quantités dosées sur les fers à gaufres à la forme voulue,
2.1. Le fer à gaufre inférieur étant chauffé à une température de 175°C,
2.2. La fer à gaufre supérieure étant chauffé à une température de 160°C;
3. Cuisson de la pâte dans les fers à gaufres en une durée de 2,5 à 3 minutes en une gaufre d'épaisseur de 2,5 à 3 mm.